# DEMANDE DE BREVET EUROPEEN

(11) **EP 2 426 326 A1**
(43) Date de publication de la demande: **07.03.2012**
(21) Numéro de dépôt: 11178229.8
(22) Date de dépôt: 22.08.2011
(51) Int. Cl.: F01N 3/035, F01N 3/28, F01N 3/20, B01D 53/94, B01J 35/00, B01J 37/02, F01N 13/02

(54) **Filtre à particules à trois revetements catalytiques**

(30) Priorité: 02.09.2010 FR 1056952
(71) Demandeur: Peugeot Citroën Automobiles SA, 78140 Vélizy-Villacoublay (FR)
(72) Inventeur: Crehan, Gabriel, 75019 PARIS (FR)
(74) Mandataire: Renous Chan, Véronique

(57) **Abrégé**

L'invention se rapporte à un filtre à particules pour la dépollution de gaz d'échappement d'une combustion, comprenant un matériau monolithique (44) de filtration des particules de suie du gaz d'échappement ; un premier revêtement (52) du matériau monolithique (44), le premier revêtement (52) comprenant un catalyseur d'oxydation ; le filtre à particules (40) comprenant en outre : un deuxième revêtement du matériau monolithique (44), le deuxième revêtement comprenant un catalyseur de réduction catalytique sélective ; un troisième revêtement (56) du matériau monolithique (44), le troisième revêtement (56) comprenant un catalyseur de combustion des particules de suie.

L'invention se rapporte en outre à une ligne d'échappement comprenant un tel filtre à particules et à un véhicule automobile comprenant une telle ligne d'échappement.

Ainsi l'invention permet d'améliorer la satisfaction aux contraintes géométriques, thermiques et de contre pression des systèmes de dépollution des gaz d'échappement des véhicules automobiles.

## Description

L'invention se rapporte à un filtre à particules pour la dépollution de gaz d'échappement d'une combustion. L'invention se rapporte en outre à une ligne d'échappement et à un véhicule automobile comprenant une telle ligne d'échappement.

Le monoxyde d'azote (NO) et le dioxyde d'azote (NO₂) sont des gaz généralement connus sous le nom de NOx. Dans le domaine de l'automobile, ces NOx sont des sous-produits de la combustion du carburant dans les moteurs à combustion interne. Ces NOx sont dangereux pour la santé humaine, ils jouent un rôle dans la formation urbaine de brouillard de pollution (ou smog) et contribuent au réchauffement climatique par l'effet de serre. Leur élimination est une contrainte très importante pour les véhicules de petite ou de moyenne taille. Ces contraintes sont liées à la faible température des gaz d'échappement de ces véhicules et au surcoût de l'utilisation d'un agent réducteur tel que les hydrocarbures prélevés du réservoir de carburant ou tel que l'urée prélevée d'un réservoir spécifique ou tel que l'ammoniac prélevée d'un réservoir spécifique. Les catalyseurs typiquement utilisés sont des réducteurs de réduction catalytique sélective (de l'anglais *Selective Catalytic Reduction* abrégé en SCR) associés à une injection d'urée ou de NH₃ pour l'élimination des NOx.

En ce qui concerne les particules de suie, générées pendant le processus de combustion du carburant, elles peuvent être piégées à l'aide d'un filtre à particules. Cependant, il est souvent préférable d'ajouter un additif dans le carburant, qui s'accroche aux particules de suie une fois formées dans la chambre de combustion, et qui améliore la combustion des suies.

Le contrôle d'autres polluants, tel que le monoxyde de carbone et les hydrocarbures, est obtenu à l'aide d'un catalyseur d'oxydation.

L'utilisation de tous ces organes de dépollution des gaz d'échappement impacte l'encombrement et l'architecture de la ligne d'échappement de véhicules automobiles. De fortes contraintes géométriques pèsent ainsi sur le système de dépollution utilisé dans un véhicule automobile, particulièrement dans le cas de petits véhicules automobiles. De plus, l'augmentation du nombre des organes de dépollution dans la ligne d'échappement génère une augmentation de la contre pression, ce qui a un impact négatif sur la consommation. Par ailleurs, chaque organe de dépollution utilise une partie de l'énergie des gaz d'échappement pour amorcer ses éléments catalytiques, de sorte que l'énergie disponible pour les organes placés en aval est moindre, ce qui peut impacter défavorablement leur efficacité.

Il existe donc un besoin d'obtention d'un système de dépollution de gaz d'échappement de moteur thermique qui améliore la satisfaction aux contraintes géométriques, thermiques et de contre pression.

Pour cela, l'invention propose un filtre à particules pour la dépollution de gaz d'échappement d'une combustion, comprenant :
- un matériau monolithique de filtration des particules de suie du gaz d'échappement ;
- un premier revêtement du matériau monolithique, le premier revêtement comprenant un catalyseur d'oxydation ;
   le filtre à particules comprenant en outre :
- un deuxième revêtement du matériau monolithique, le deuxième revêtement comprenant un catalyseur de réduction catalytique sélective ;
- un troisième revêtement du matériau monolithique, le troisième revêtement comprenant un catalyseur de combustion des particules de suie. Avantageusement, les trois revêtements sont répartis de façon à ce que les gaz d'échappement rencontrent d'abord le troisième revêtement, ensuite le deuxième revêtement et enfin le premier revêtement.

Selon une variante, le deuxième revêtement est imprégné dans l'épaisseur du matériau monolithique.

Selon une variante, le premier revêtement et/ou le troisième revêtement sont majoritairement imprégnés sur une surface extérieure du matériau monolithique.

Selon une variante, le filtre à particules comprend une partie amont d'admission des gaz d'échappement, le troisième revêtement étant imprégné majoritairement sur la surface extérieure du matériau monolithique du côté de la partie amont du filtre à particules.

Selon une variante, le filtre à particules comprend une partie avale d'évacuation des gaz d'échappement, le premier revêtement étant imprégné majoritairement sur la surface extérieure du matériau monolithique du côté de la partie avale du filtre à particules. Une partie du premier revêtement peut se trouver dans la paroi poreuse et la majeure partie sur la surface externe. Dans une variante, le premier revêtement peut se trouver totalement sur la surface d'une paroi poreuse.

Selon une variante, le filtre à particules comprend une partie amont d'admission des gaz d'échappement et une partie avale d'évacuation des gaz d'échappement, les trois revêtements étant répartis dans l'ordre du premier revêtement au troisième revêtement selon l'épaisseur du matériau monolithique depuis la surface extérieure du matériau monolithique du côté de la partie avale du filtre à particules jusqu'à la surface extérieure du matériau monolithique du côté de la partie amont.

Selon une variante, le premier revêtement et/ou le troisième revêtement sont imprégnés de façon homogène sur la surface extérieure du matériau monolithique.

Selon une variante, le premier et/ou le troisième revêtement sont imprégnés de façon homogène majoritairement sur la surface extérieure du matériau monolithique sur toute son longueur.

Selon une variante, le premier revêtement et/ou le troisième revêtement sont imprégnés de façon non homogène, en privilégiant certaines zones (par « zoning »), majoritairement sur la surface extérieure du matériau monolithique.

Selon une variante, le premier revêtement comprend au moins un des métaux précieux parmi le groupe des métaux précieux constitué de Pt, Pd, Rh, Ru, Re, Au et Ag, le catalyseur du troisième revêtement comprenant moins de métaux précieux que le catalyseur du premier revêtement. Dans une variante, le premier revêtement peux contenir au moins un des oxydes des métaux parmi des lanthanides, des actinides, des zéolithes, des pérovskites, des alcalins, des alcalino- terreux ou des métaux pauvres etc...

Selon une variante, le catalyseur du troisième revêtement ne comprend pas de métaux précieux.

Selon une variante, le catalyseur du deuxième revêtement est dépourvu de métaux précieux choisis parmi le groupe des métaux précieux constitué de Pt, Pd, Rh, Ru, Re, Au et Ag.

Selon une variante, le deuxième revêtement catalytique peut former une continuité avec le troisième revêtement catalytique. Le deuxième et le troisième revêtement catalytique peuvent avoir la même composition et formulation catalytique. Le deuxième et troisième revêtement catalytique peuvent faire partie du même revêtement catalytique, avec une partie du même revêtement dans la paroi poreuse (le deuxième revêtement catalytique) jouant principalement un rôle contre les NOx et l'autre partie du même revêtement sur la surface de la paroi poreux (troisième revêtement) directement en contact avec la suie. Ce même revêtement (dans la paroi et sur la surface) qui constitue le deuxième et le troisième revêtement catalytique peut contenir au moins un des oxydes des métaux parmi des lanthanides, des actinides, des zéolithes, des pérovskites, des alcalins, des alcalino- terreux ou des métaux pauvres etc...

L'invention propose en outre une ligne d'échappement comprenant le filtre à particules précédent.

Selon une variante, la ligne d'échappement comprend un injecteur d'un réducteur des NOx, comme par exemple: l'urée, l'hydrogène, des hydrocarbures, formate d'ammonium, formate de guanidine, l'ammoniac etc... Cet injecteur du réducteur peut être situé en amont ou en aval du turbo compresseur.

Selon une variante, le circuit de carburant et le réservoir du carburant sont équipés d'injecteurs d'additif pour la combustion des suies.

Selon une variante, la ligne d'échappement est équipée d'une sonde NOx en aval et / ou en amont du FAP catalysé.

Selon une variante, la ligne d'échappement est équipé d'une sonde oxygène en aval et / ou en amont du FAP catalysé.

Selon une variante, la ligne d'échappement est équipée d'une sonde qui peut fonctionner en mode sonde NOx pour mesurer le niveau des NOx et / ou NH₃ et en mode sonde oxygène pour mesurer la richesse.

L'invention propose encore un véhicule automobile comprenant un moteur et la ligne d'échappement du moteur précédente.

D'autres caractéristiques et avantages de l'invention apparaîtront à la lecture de la description détaillée qui suit des modes de réalisation de l'invention, donnés à titre d'exemple uniquement et en référence aux dessins qui montrent :
- figure 1, un schéma d'un moteur à combustion interne associé à une ligne d'échappement des gaz de combustion du moteur selon un mode de réalisation de l'invention ;
- figure 2, une représentation schématique de la structure d'un filtre à particules selon un mode de réalisation de l'invention.

L'invention se rapporte à un filtre à particules pour la dépollution de gaz d'échappement d'une combustion. Le filtre à particules comprend un matériau monolithique de filtration des particules de suie du gaz d'échappement à dépolluer. Le filtre à particules comprend en outre un premier revêtement du matériau monolithique. Ce premier revêtement comprend un catalyseur d'oxydation.

Le filtre à particules comprend en outre un deuxième revêtement et un troisième revêtement du matériau monolithique. Le deuxième revêtement comprend un catalyseur de réduction catalytique sélective ou catalyseur SCR. Le troisième revêtement comprend un catalyseur de combustion des particules de suie. Le catalyseur de combustion des particules de suie aide la combustion des suies piégées par le matériau monolithique du filtre à particules, lors de la régénération du filtre à particules.

Le filtre à particules proposé intègre ainsi un grand nombre des fonctions des systèmes classiques de dépollution de gaz d'échappement le tout dans le volume réduit du filtre à particules. L'invention permet d'améliorer la satisfaction aux contraintes géométriques, thermiques et de contre pression par élimination du besoin de plusieurs monolithes individuels pour chaque fonction (FAP, deNOx et CATOX) en les mettant dans la même structure.

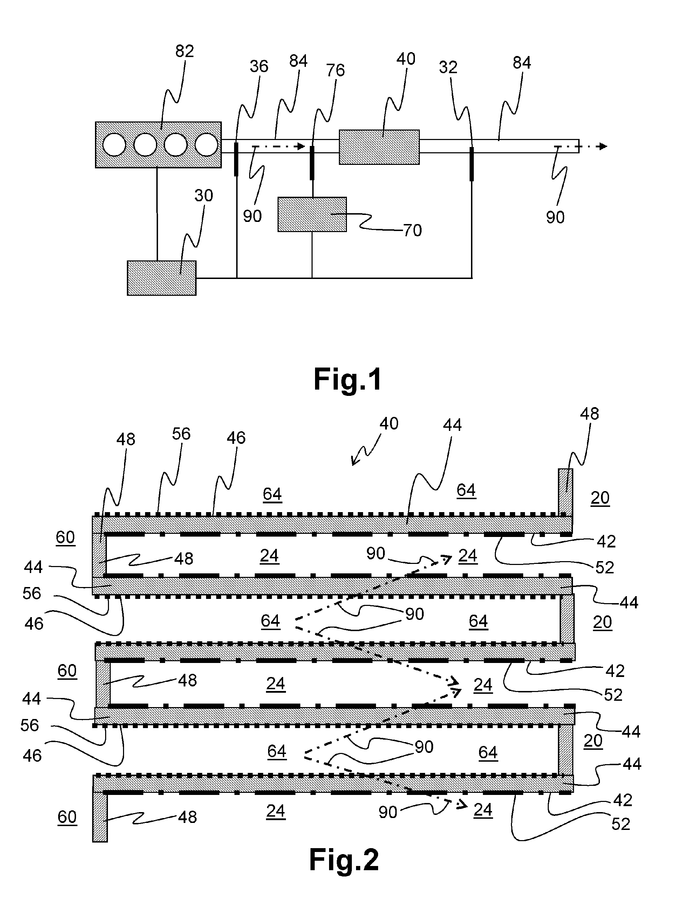

La figure 1 représente un schéma d'un moteur 82 à combustion interne relié à une ligne d'échappement 84 des gaz provenant de la combustion du moteur 82. La ligne d'échappement 84 comprend le filtre à particules 40 proposé. L'invention se rapporte aussi à une telle ligne d'échappement 84. L'invention se rapporte encore à un véhicule automobile (non illustré) comprenant le moteur 82 et la ligne d'échappement 84 du moteur 82.

La ligne d'échappement 84 est particulièrement adaptée pour les cas où le moteur 82 est un moteur thermique de type diesel. Le filtre à particules 40 (en abrégé FAP) est alors un filtre à particules diesel (de l'anglais *Diesel Particules Filter* abrégé en DPF).

La ligne d'échappement 84 comprend de préférence un injecteur 76 de réducteur SCR, classiquement de l'urée ou de l'ammoniac (NH₃). D'autres réducteurs des NOx peuvent également être utilisés comme : l'hydrogène, des hydrocarbures, du formate d'ammonium, du formate de guanidine, l'ammoniac, l'urée etc... L'injecteur 76 d'urée ou d'ammoniac est disposé dans la ligne d'échappement 84 en amont du filtre à particules 40 (Les utilisations des termes amont et aval dans ce document se réfèrent au sens de circulation des gaz d'échappement dans la ligne d'échappement 84 et dans le filtre à particules 40). L'injecteur de réducteur des NOx peut être situé en amont ou en aval de turbocompresseur. L'injecteur peut être de toutes sortes ; faible pression, haute pression, catalysé ou pas. Un mélangeur peut être situé entre l'injecteur et le FAP catalysé pour faciliter l'arrosage du réducteur de NOx. La ligne d'échappement 84 proposée comprend alors l'ensemble des organes d'un système SCR classique, à savoir, l'injection de réducteur en amont d'un catalyseur SCR. La ligne d'échappement proposée permet ainsi la diminution des NOx présents dans les gaz d'échappement à dépolluer.

Le réducteur SCR injecté peut provenir d'un réservoir spécifique 70. L'injection de réducteur dans la ligne d'échappement 84 peut être contrôlée par un ordinateur de bord 30 embarqué dans le véhicule automobile proposé. La ligne d'échappement 84 peut ainsi être pourvue de détecteur de NOx en amont 36 et en aval 32 du filtre à particules 40 permettant de contrôler la quantité de réducteur SCR de façon à optimiser la diminution des NOx dans la ligne d'échappement 84.

Le filtre à particules 40 peut comprendre classiquement une structure alvéolaire réalisée par le matériau monolithique de filtration de particules. La géométrie de la structure alvéolaire peut être réalisée par extrusion à partir d'une forme à nids d'abeille, ou à motifs triangulaire ou bien encore à motifs carrés. La figure 2 représente schématiquement une vue de la structure d'un mode de réalisation du filtre à particules 40. La vue de la figure 2 est une vue en coupe du filtre à particules 40 dans le sens de la direction d'extrusion d'une forme à motifs carrés. Le matériau monolithique 44 forme des canaux de section carrée alternativement obturés en partie amont 60 et en partie avale 20 du FAP 40 par des éléments 48. Selon l'alternance de l'obturation, on obtient des canaux 24 communiquant avec la partie avale 20 du FAP 40 ou des canaux 64 communiquant avec la partie amont 60 du FAP 40. Les canaux 24 et 64 sont séparés entre eux par les parois du matériau monolithique 44. Le matériau monolithique 44 de filtration est classiquement un matériau poreux permettant de piéger les particules des gaz d'échappement 90 traversant le matériau monolithique 44 du FAP 40 en passant des canaux 64 aux canaux 24. Le matériau monolithique 44 peut être choisi parmi les matériaux céramiques suivants : Cordiérite, SiC, B4c, Si₃N₄, BN, AIN, Al₂O₃, ZrO₂, zéolithes, mullite, titanate d'aluminium, ZrB₂ et Sialon.

Le matériau monolithique 44 peut être réalisé classiquement sous la forme d'une brique (non illustré). Plusieurs briques de matériau monolithique 44 peuvent être assemblées entre elles à l'aide de matériau de cimentage, pour former un pain

(non illustré) de filtre à particules. Le matériau de cimentage peut être choisi parmi les matériaux céramiques précédemment énumérés.

Chacun des revêtements du matériau monolithique participe à la dépollution des gaz d'échappements 90 du moteur 82.

Le premier revêtement 52 comprend un catalyseur d'oxydation. Ce catalyseur d'oxydation permet la diminution des monoxydes de carbone (CO) ainsi que des hydrocarbures (de formule générique HₐC, avec a le nombre de H dans l'hydrocarbure, le nombre de C n'étant pas figuré) présents dans les gaz d'échappement. Le catalyseur d'oxydation du premier revêtement 52 catalyse par exemple les réactions chimiques suivantes :
- Adsorption / Désorption de HₐC par le FAP 40 ;
- CO + 1/2 O₂ --> CO₂ ;
- H₂ + 1/2 O₂ --> H₂O ;
- HₐC + O₂ --> CO₂ + a/2 H₂O ;
- HₐC_suie_rapide + O₂ --> CO₂ + a/2 H₂O
- HₐC_suie_lente + O₂ --> (1-hcco) CO₂ + (hcco) CO + a/2 H₂O, où hcco correspond aux hydrocarbures partialement brulés.

Le premier revêtement 52 peut notamment comprendre au moins l'un des matériaux suivants : W₂O₃ ; MoO₃ , Fe₂O₃ ; SiO₂; Al₂O₃ ; TiO₂ ; ZrO₂ ; CeO₂ ; Y₂O₃ ; des métaux précieux (choisis dans le groupe des métaux précieux composés de Pt, Pd, Rh, Ru, Re, Au, Ag) ; des pérovskites, des métaux alcalins ; des métaux alcalino-terreux ; des métaux de transitions (Sc, Ti, V, Cr, Mn, Fe, Co, Ni, Cu, Zn) ; ainsi que des pièges à HₐC tels que de l'argile ou des zéolithes.

Le premier revêtement 52 contribue à la fonction réalisée dans l'art antérieur à l'aide de pains de monolithes de catalyseurs d'oxydation abrégé en CATOX (également connu en anglais sous le terme *Diesel Oxydation Catalyst* abrégé en DOC).

Le deuxième revêtement comprend un catalyseur SCR. Le catalyseur SCR catalyse par exemple les réactions chimiques suivantes lorsque le réducteur est de l'ammoniac :
- Adsorption / Désorption de NH₃ par le FAP 40 ;
- 4 NH₃ + 4 NO + 3 O₂ --> 4 N₂O + 6 H₂O ;
- 4 NH₃ + 16 NO --> 10 N₂O + 3 H₂O ;
- 4 NH₃ + 2 NO₂ --> N2 + N₂O + 3 H₂O ;
- 4 NH₃ + 2 NO₂ + O₂ --> 4 N₂ + 6 H₂O ;
- 8 NH₃ + 6 NO₂ --> 7 N₂ + 12 H₂O ;
- 4 NH₃ + 2 NO + 2 NO₂ --> 4 N₂ + 6 H₂O ;
- 4 NH₃ + 4 NO + O₂ --> 4 N₂ + 6 H₂O ;
- H₂ + NO --> H₂O + 1/2 N₂ ;
- CO + NO --> CO₂ + 1/2 N₂.

Le deuxième revêtement peut notamment comprendre au moins l'un des matériaux suivants : W₂O₃ ; MoO₃ ; Fe₂O3 ; SiO₂; Al₂O₃ ; TiO₂ ; ZrO₂ ; CeO₂ ; Y₂O₃ ; des métaux de transitions (Sc, Ti, V, Cr, Mn, Fe, Co, Ni, Cu, Zn) ; des pérovskites ; ou des zéolithes dopés avec au moins une des métaux parmi Ce, Zr, Pr, Cu, Fe ; Mn, Co, Ag, Au ; des métaux de lanthanides.

De par l'injection de réducteur SCR, urée ou ammoniac, en amont du FAP 40 dans la ligne d'échappement 84, le deuxième revêtement contribue à la fonction de réduction des NOx. Cette fonction est réalisée dans l'art antérieur à l'aide de pains de monolithes de catalyseurs SCR. La présence du deuxième revêtement sur le matériau 44 du FAP 40 permet de se passer de l'organe SCR classiquement utilisé dans les lignes d'échappement, améliorant ainsi la satisfaction aux contraintes géométrique, thermique et de contre pression de la ligne d'échappement 84.

Chacun des premier et deuxième revêtements réalise une fonction de catalyse de réactions chimiques. La catalyse de réaction chimique permet une dépollution plus efficace des gaz d'échappement par rapport aux solutions connues de dépollution constituées par des pièges à NOx, pièges à SOx ou pièges à HₐC. De tels pièges à polluants assurent la dépollution des gaz d'échappement à l'aide de régénération des pièges. Le recours aux régénérations modifie la stratégie de pilotage moteur et accélère la détérioration thermique de la structure du FAP 40, i.e. du matériau monolithique 44. Il est ainsi préférable que chacun des revêtements du FAP 40 proposé réalise une fonction de catalyse de réaction chimique plutôt qu'une fonction de piège de polluants limitant ainsi le recours à des régénérations.

Le troisième revêtement 56 comprend un catalyseur de combustion des particules de suie. Le catalyseur de combustion des particules de suie catalyse par exemple les réactions chimiques suivantes lors de la régénération du FAP 40 :
- HₐC_suie_rapide + O₂--> CO₂ + a/2 H₂O
- HₐC_suie_lente + O₂ --> (1-hcco) CO₂ + (hcco) CO + a/2 H₂O, où hcco correspond aux hydrocarbures partiellement brulés.

Le troisième revêtement 56 peut notamment comprendre au moins l'un des matériaux suivants : W₂O₃ ; MoO₃ , Fe₂O₃ ; SiO₂; Al₂O₃ ; TiO₂ ; ZrO₂ ; CeO₂ ; Y₂O₃ ; des métaux de transitions (Sc, Ti, V, Cr, Mn, Fe, Co, Ni, Cu, Zn) ; des métaux de W, Mo; des pérovskites; ou des zéolithes dopés avec au moins une des métaux parmi Ce, Zr, Pr, Cu, Fe ; Mn, Co, Ag, Au; des métaux alcalins; des métaux alcalino-terreux; des métaux de lanthanides.

Le troisième revêtement 56 aide avec la combustion des suies piégées par le matériau monolithique du FAP 40 proposé lors de la régénération du FAP 40. Le troisième revêtement contribue ainsi à la fonction réalisée dans l'art antérieur par la combinaison d'un FAP de l'art antérieur et d'une injection d'additif de filtre à particules. La ligne d'échappement 84 étant munie du FAP 40 proposé, peut alors être dépourvue d'injecteur d'additif de filtre à particules. La satisfaction aux contraintes géométrique de la ligne d'échappement 84 en est améliorée. En revanche, cet avantage avec le troisième revêtement n'exclut pas la possibilité d'utiliser un additif dans le carburant pour faciliter la combustion des suies à basse température. La combinaison des deux systèmes sera complémentaire vers une efficacité améliorée pour la régénération des suies.

Dans l'ensemble la satisfaction aux contraintes géométriques, permise par le FAP 40 proposé, autorise la réalisation d'un système compact de dépollution des gaz d'échappement. Ceci entraîne une réduction des coûts de fabrication de la ligne d'échappement 84.

De plus, l'utilisation du FAP 40 proposé permet de réaliser l'ensemble des réactions chimiques de dépollution des gaz d'échappement au même niveau dans la ligne d'échappement 84, c'est-à-dire au niveau de l'emplacement du FAP 40. En conséquence, toutes les réactions de dépollution sont réalisées sensiblement avec une même température des gaz d'échappement. La réalisation de toutes les réactions de dépollution à la même température repartit équitablement l'aspect bénéfique de la température sur l'ensemble des réactions chimiques. L'efficacité des réactions chimiques de dépollution est ainsi améliorée.

Les différents revêtements comprenant des catalyseurs peuvent être réalisés par imprégnation du matériau monolithique 44 de manière connue en soi. L'imprégnation consiste par exemple en l'utilisation d'un fluide solvant contenant les éléments composant le revêtement souhaité. L'imprégnation du matériau monolithique 44 est ensuite réalisée par aspiration ou poussée du fluide contre les parois du matériau monolithique 44. L'introduction de surfactants dans le fluide permet de modifier les propriétés du fluide et en conséquence de modifier la qualité et la quantité de l'imprégnation du revêtement. On peut ainsi aussi bien garder le fluide contenant le catalyseur sur la paroi ou l'encourager à s'attacher à la paroi du matériau monolithique 44. L'imprégnation des différents revêtements sur le matériau monolithique est de préférence réalisée de façon homogène sur la longueur des surfaces extérieures 42 et 46. Ainsi les revêtements sont homogènes, c'est-à-dire que l'épaisseur des revêtements ne varie pas en fonction de l'éloignement du revêtement par rapport aux parties amont 60 et avale 20 du FAP 40. En d'autres termes, l'épaisseur des revêtements est constante. Les réactions chimiques sont ainsi catalysées de façon homogène dans le FAP 40.

Selon le mode de réalisation de la figure 2, les revêtements du matériau monolithique 44 peuvent être répartis, c'est-à-dire imprégnés, à différents emplacements dans l'épaisseur du matériau monolithique 44. Ainsi le premier revêtement 52 peut être disposé, imprégné, sur une surface extérieure 42 du matériau monolithique 44, la surface extérieure 42 étant du côté de la partie avale 20 du FAP 40. Le troisième revêtement 56 peut être disposé, imprégné, sur une surface extérieure 46 du matériau monolithique 44, la surface extérieure 46 étant du côté de la partie amont 60 du FAP 40. Le deuxième revêtement (non référencé) peut être disposé, imprégné, dans l'épaisseur même du matériau monolithique 44, c'est-à-dire entre les surfaces extérieures 42 et 46.

Dans un mode de réalisation non illustré, les trois revêtements de catalyseur peuvent être disposés autrement, c'est-à-dire à n'importe quel emplacement dans l'épaisseur du matériau monolithique 44. Cependant il est préférable que les revêtements soient disposés selon un ordre particulier dans l'épaisseur du matériau monolithique depuis la surface extérieure 42 du matériau monolithique 44 du côté de la partie avale 20 du filtre à particules 40 jusqu'à la surface extérieure 46 du matériau monolithique 44 du côté de la partie amont 60. Cet ordre particulier est conforme à l'ordre des revêtements du mode de réalisation de la figure 2 et il correspond à l'ordre des revêtements pris dans l'ordre croissant, c'est à dire du premier revêtement 52 au troisième revêtement 56 en passant par le deuxième revêtement.

Dans un tel mode de réalisation, les gaz d'échappement 90 rencontrent d'abord le troisième revêtement 56, c'est-à-dire le revêtement comprenant le catalyseur de combustion des suies. Ce catalyseur contient de préférence peu de métaux précieux pour éviter d'altérer le réducteur SCR injecté dans les gaz d'échappement 90 par l'injecteur 76. Le troisième revêtement 56 comprend par exemple moins de métaux précieux que le catalyseur du premier revêtement 52. Plus préférentiellement le troisième revêtement 56 est dépourvu de métaux précieux. La présence du troisième revêtement 56 à l'amont du FAP 40 permet de catalyser la combustion des particules de suie piégées au niveau du troisième revêtement 56. La concentration de la réaction de combustion au niveau du troisième revêtement permet de limiter la réaction de combustion des suies au niveau du deuxième revêtement, évitant ainsi le vieillissement thermique prématuré du catalyseur SCR du fait des régénérations du FAP 40.

Les gaz d'échappement 90 rencontrent ensuite le deuxième revêtement, c'est-à-dire le revêtement comprenant le catalyseur SCR. Du fait de la faible quantité de métaux précieux dans le troisième revêtement 56, le réducteur SCR injecté dans les gaz 90 parvient en grande majorité jusqu'au deuxième revêtement pour permettre une réduction catalytique sélective maximale des NOx. Dans la même logique, le deuxième revêtement est de préférence dépourvu de métaux précieux, les métaux précieux altérant le réducteur SCR.

Les gaz d'échappement 90 rencontrent enfin le premier revêtement 52, c'est à dire le revêtement qui comprend le catalyseur d'oxydation. La majorité des NOx ayant été réduit par le deuxième revêtement, le premier revêtement peut comprendre des métaux précieux sans risque d'altération des performances de la fonction d'élimination des NOx par le réducteur SCR. Le premier revêtement 52 peut ainsi comprendre de plus grande quantité de métaux précieux que le troisième revêtement 56. La présence de plus grande quantité de métaux précieux dans le premier revêtement 52 permet d'améliorer l'oxydation des polluants restants, même pour de faibles températures de réchauffage des gaz d'échappement (par exemple inférieures à 400°C).

Par ailleurs, il existe encore un effet de synergie entre le troisième revêtement 56 disposé en aval du premier revêtement 52. En effet le premier revêtement 52 permet d'oxyder les imbrûlés formés lors de régénération du FAP au niveau du troisième revêtement 56. De par cette oxydation au niveau du premier revêtement 52, le FAP 40 récupère une énergie thermique qui facilite et raccourcit la durée de la phase de régénération du FAP 40.

En mettant les revêtements catalytiques SCR et DOC dans la même structure 40 et non pas dans des monolithes séparés, on élimine le besoin de plusieurs monolithes dans la même ligne d'échappement. En conséquence, on peut rapprocher une seule structure du FAP catalysé de la sortie moteur pour chauffer et mieux amorcer les réactions avec les catalyseurs d'oxydation et SCR. Ainsi, on augmente leurs efficacités.

La disposition des revêtements dans cet ordre particulier permet une meilleure réalisation des fonctions de chacun des catalyseurs.

## Revendications

1. Un filtre à particules pour la dépollution de gaz d'échappement d'une combustion, comprenant :
• un matériau monolithique (44) de filtration des particules de suie du gaz d'échappement ;
• un premier revêtement (52) du matériau monolithique (44), le premier revêtement (52) comprenant un catalyseur d'oxydation ;
le filtre à particules (40) étant **caractérisé en ce qu'**il comprend en outre :
• un deuxième revêtement du matériau monolithique (44), le deuxième revêtement comprenant un catalyseur de réduction catalytique sélective ;
• un troisième revêtement (56) du matériau monolithique (44), le troisième revêtement (56) comprenant un catalyseur de combustion des particules de suie, les trois revêtements étant répartis de façon à ce que les gaz d'échappement rencontrent d'abord le troisième revêtement (56), ensuite le deuxième revêtement et enfin le premier revêtement (52).

2. Le filtre à particules selon la revendication 1 **caractérisé en ce que** le deuxième revêtement est imprégné dans l'épaisseur du matériau monolithique (44).

3. Le filtre à particules selon la revendication 1 ou 2, **caractérisé en ce que** le premier revêtement (52) et/ou le troisième revêtement (56) sont imprégnés majoritairement sur une surface extérieure (42, 46) du matériau monolithique (44).

4. Le filtre à particules selon la revendication 3, **caractérisé en ce qu'**il comprend une partie amont (60) d'admission des gaz d'échappement, le troisième revêtement (56) étant imprégné majoritairement sur la surface extérieure (46) du matériau monolithique (44) du côté de la partie amont (60) du filtre à particules (40).

5. Le filtre à particules selon la revendication 3 ou 4, **caractérisé en ce qu'**il comprend une partie avale (20) d'évacuation des gaz d'échappement, le premier revêtement (52) étant imprégné majoritairement sur la surface extérieure (42) du matériau monolithique (44) du côté de la partie avale (20) du filtre à particules (40).

6. Le filtre à particules selon l'une des revendications 1 à 5, **caractérisé en ce qu'**il comprend une partie amont (60) d'admission des gaz d'échappement et une partie avale (20) d'évacuation des gaz d'échappement, les trois revêtements (52, 56) étant répartis dans l'ordre du premier revêtement (52) au troisième revêtement (56) selon l'épaisseur du matériau monolithique (44) depuis la surface extérieure (42) du matériau monolithique (44) du côté de la partie avale (20) du filtre à particules (40) jusqu'à la surface extérieure (46) du matériau monolithique (44) du côté de la partie amont (60).

7. Le filtre à particules selon l'une des revendications 1 à 6 dans lequel le deuxième et le troisième revêtement sont la continuité du même revêtement avec la même formulation et composition chimique.

8. Le filtre à particules selon l'une des revendications 3 à 6, **caractérisé en ce que** le premier revêtement (52) et/ou le troisième revêtement (56) sont imprégnés de façon homogène sur la surface extérieure (42, 46) du matériau monolithique.

9. Le filtre à particules selon l'une des revendications 3 à 6, **caractérisé en ce que** le premier revêtement (52) et/ou le troisième revêtement (56) sont imprégnés de façon non homogène sur la surface extérieure (42, 46) du matériau monolithique.

10. Le filtre à particules selon l'une des revendications 1 à 9, **caractérisé en ce que** le premier revêtement (52) comprend des métaux précieux parmi le groupe des métaux précieux constitué de Pt, Pd, Rh, Ru, Re, Au et Ag, le catalyseur du troisième revêtement (56) comprenant moins de métaux précieux que le catalyseur du premier revêtement (52).

11. Le filtre à particules selon la revendication 10, **caractérisé en ce que** le catalyseur du troisième revêtement (56) ne comprend pas de métaux précieux.

12. Le filtre à particules selon l'une des revendications 1 à 11, **caractérisé en ce que** le catalyseur du deuxième revêtement est dépourvu de métaux précieux choisis parmi le groupe des métaux précieux constitué de Pt, Pd, Rh, Ru, Re, Au et Ag.

13. Une ligne d'échappement **caractérisée en ce qu'**elle comprend le filtre à particules (40) selon l'une des revendications 1 à 12.

14. La ligne d'échappement selon la revendication 13, **caractérisée en ce qu'**elle comprend un injecteur (76) d'un réducteur des NOx.

15. La ligne d'échappement selon la revendication 13 ou 14, **caractérisée en ce qu'**elle est dépourvue d'injecteur d'additif de filtre à particules.
